# EUROPEAN PATENT APPLICATION

(11) **EP 2 808 312 A1**
(43) Date of publication of application: **03.12.2014**
(21) Application number: 14166834.3
(22) Date of filing: 02.05.2014
(51) Int. Cl.: C04B 24/38, C04B 28/02, C04B 28/04, C04B 28/14, C04B 28/16

(54) **Self-leveling composition**

(30) Priority: 23.05.2013 JP 2013108484
(71) Applicant: Shin-Etsu Chemical Co., Ltd., Chiyoda-ku, Tokyo (JP)
(72) Inventor: Konishi, Hidekazu, Joetsu-shi, Niigata (JP); Yamakawa, Tsutomu, Joetsu-shi, Niigata (JP)
(74) Representative: Stoner, Gerard Patrick

(57) **Abstract**

A self-leveling composition is provided comprising a water-soluble hydroxyalkyl alkyl cellulose, cement, aggregate, and water. The hydroxyalkyl alkyl cellulose is such that a degree of alkyl substitution is 1.2-1.7, the sum of the degree of alkyl substitution and a molar substitution of hydroxyalkyl is 1.5-2.0, and a proportion of glucose rings not substituted with alkyl and hydroxyalkyl is up to 10 mol% based on glucose ring units. The composition has a minimal change with time of fluidity and a short setting time despite the use of inexpensive cellulose ether.

## Description

### TECHNICAL FIELD

This invention relates to a self-leveling composition having good or improved self-leveling ability, of the kind used as floor surface finish on concrete structures or applied to the top of continuous foundations in houses.

Throughout the specification, the term "self-leveling" is often abbreviated as SL.

### BACKGROUND

Owing to their self-leveling property, SL compositions are often used for the purposes of saving the labor and improving the efficiency involved in the operation of floor surface finish on concrete structures. They have gained rapid widespread use to replace the conventional mortar or concrete direct finish, mainly as the under-floor plaster-work-finish in buildings or the continuous foundation top leveler in houses. The SL compositions for use in these under-floor working and other methods include gypsum and cement based compositions.

The SL compositions are required to have a good flow, an appropriate working life, and a fast setting time. These properties are generally controlled by a choice of the type and amount of water-reducing agent, the addition of a set retarder, a combination of a set accelerator with a set retarder, or the like.

JP-A H10-231165 discloses a cement-based SL composition whose working life is adjusted using a lithium salt as the set accelerator and aluminum sulfate as the set retarder at the same time. In this composition, the lithium salt such as lithium carbonate serves as the set accelerator to alumina cement, and the aluminum sulfate has a set retardation effect to alumina cement, indicating the combined use of set retarder and set accelerator to the overall system. They have positive and negative effects on the working life, respectively, so that the working life may be controlled. However, since the resultant effect varies largely with the mix ratio of two additives, it is difficult to meet both the working life and the setting time.

JP-A 2003-313069 discloses a high-fluidity mortar composition with inhibited separation of aggregate and a making method. To a base compound comprising 100 parts by weight of a mixture of cement and aggregate in a weight ratio from 75/25 to 20/80 and 10 to 40 parts by weight of water, 0.01 to 1 part by weight of water-soluble cellulose ether having a viscosity of 100 to 30,000 mPa·s as 2 wt% aqueous solution and 0.005 to 1 part by weight of a microbiologically fermented thickening polysaccharide are added. The resulting mortar composition has improved fluidity while separation of aggregate is inhibited. Since the water-soluble cellulose ether and the microbiologically fermented thickening polysaccharide are used, a working life is ensured, but the setting time is prolonged.

JP-A 2008-201612 describes that a SL composition having a minimal change with time of fluidity and a short setting time is obtained using a water-soluble cellulose ether having a degree of alkyl substitution of 1.6 to 2.5 and a set accelerator. Since the water-soluble cellulose ether required for the composition has such a high degree of alkyl substitution, its preparation becomes expensive.

### Citation List

Patent Document 1: JP-A H10-231165
Patent Document 2: JP-A 2003-313069
Patent Document 3: JP-A 2008-201612 (USP 7588635, EP 1964826)

### THE INVENTION

An object herein is to provide a composition useful as an SL composition, having a minimal change with time of fluidity and a short setting time, and which can be made inexpensively.

The inventors have found that good or better results are obtained using a water-soluble hydroxyalkyl alkyl cellulose of specific chemical structure.

The invention provides a composition comprising a water-soluble hydroxyalkyl alkyl cellulose, cement, an aggregate, and water. The water-soluble hydroxyalkyl alkyl cellulose has a degree of alkyl substitution of 1.2 to 1.7, the sum of the degree of alkyl substitution and a molar substitution of hydroxyalkyl being 1.5 to 2.0, and a proportion of glucose rings not substituted with alkyl and hydroxyalkyl being up to 10 mol% based on glucose ring units.

The composition may further comprise a water-reducing agent and/or a defoamer.

Typically, the water-soluble hydroxyalkyl alkyl cellulose is hydroxypropyl methyl cellulose or hydroxyethyl methyl cellulose.

Preferably, the water-soluble hydroxyalkyl alkyl cellulose is such that the oversize fraction on No. 100 sieve with an opening of 150 µm described in the Japanese Pharmacopoeia, 16th Edition is up to 5.0% by weight.

Other aspects include the preparation and use of the composition, especially as a self-leveling composition, such as for a floor surface finish or as a foundation top leveler.

### ADVANTAGEOUS EFFECTS

According to the invention, a composition effective as an SL composition having a minimal change with time of fluidity and a short setting time is obtainable despite the use of inexpensive cellulose ether.

### FURTHER EXPLANATIONS; OPTIONS AND PREFERENCES

As used in the art, DS refers to "degree of substitution" and MS to "molar substitution".

The water-soluble hydroxyalkyl alkyl cellulose used herein has a degree of alkyl substitution of 1.2 to 1.7, preferably 1.3 to 1.6, and more preferably 1.4 to 1.5. The sum of the degree of alkyl substitution and a molar substitution of hydroxyalkyl (i.e., moles of substituting hydroxyalkyl) is 1.5 to 2.0, preferably 1.6 to 1.9, and more preferably 1.7 to 1.8. If the DS of alkyl is less than 1.2 or if the sum of the DS of alkyl and the MS of hydroxyalkyl is less than 1.5, then the setting time becomes longer and a substantial change with time of fluidity occurs. If the DS of alkyl exceeds 1.7 or if the sum of the DS of alkyl and the MS of hydroxyalkyl exceeds 2.0, then part of the water-soluble cellulose ether undergoes thermal gelation, failing to gain the desired properties.

With respect to DS of alkyl and MS of hydroxyalkyl, measurement may be made by the analysis of DS of hypromellose (hydroxypropyl methyl cellulose) prescribed in the Japanese Pharmacopoeia, 16th Edition.

A proportion of glucose rings not substituted with alkyl and hydroxyalkyl is up to 10 mol%, preferably up to 9 mol%, and more preferably up to 8 mol%, based on glucose ring units. If this proportion exceeds 10 mol%, then the setting time becomes longer and a substantial change with time of fluidity occurs.

The proportion of glucose rings not substituted with alkyl and hydroxyalkyl groups is analyzed as described in Macromolecules, 20, 2413 (1987) and Sen-i Gakkaishi (Journal of Japanese Textile Society), 40, T-504 (1984), by subjecting a water-soluble hydroxyalkyl alkyl cellulose to hydrolysis in sulfuric acid, neutralization, chemical reduction with sodium borohydride, purification by filtration, and acetylation.

The resulting sample is analyzed by mass spectrometry together with one of ¹³C-NMR, liquid chromatography and gas chromatography, while heating from 150°C to 280°C at a rate of 2.5°C/min and holding at 280°C for 10 minutes. The proportion is determined from detection graphical parameters of respective groups thus identified.

The water-soluble hydroxyalkyl alkyl cellulose used herein is a nonionic cellulose ether. Examples include hydroxypropyl methyl cellulose and hydroxyethyl methyl cellulose.

Preferably the water-soluble hydroxyalkyl alkyl cellulose used is of such size that the oversize fraction on No. 100 (opening 150 µm) sieve described in the Japanese Pharmacopoeia, 16th Edition is up to 5.0% by weight, more preferably up to 3.5% by weight. If the oversize fraction exceeds 5.0% by weight, pinholes may form on the surface, detracting from the aesthetic appearance.

In addition, the hydroxyalkyl alkyl cellulose should preferably have a viscosity of 5 to 100,000 mPa·s, more preferably 10 to 90,000 mPa·s, and even more preferably 15 to 80,000 mPa·s when measured at 20°C as a 2 wt% aqueous solution, using a Brookfield viscometer at 20 rpm. If the viscosity is less than 5 mPa·s, resistance to material separation may become insufficient. If the viscosity exceeds 100,000 mPa·s, the composition may become too viscous, with many drawbacks including loss of SL property, wrinkled surface, degradation of aesthetic appearance, inhibition of defoamer function by a high viscosity, generation of bubbles, craters or pits, and a lowering of strength.

The water-soluble hydroxyalkyl alkyl cellulose is preferably added in an amount of 0.02 to 0.5 part, more preferably 0.03 to 0.45 part, and even more preferably 0.04 to 0.4 part by weight per 100 parts by weight of cement, gypsum and aggregate combined (this combination being referred to as "base compound" hereinafter). If the amount of cellulose added is less than 0.02 part by weight, there may result drawbacks such as insufficient resistance to material separation, bleeding, aggregate settle-down, nonuniform strength after set, efflorescence, and cracks. If the amount of cellulose added exceeds 0.5 parts by weight, the composition may become too viscous, with many drawbacks including poor flow, loss of fluidity which is critical for SL compositions, wrinkled surface, degradation of aesthetic appearance, inhibition of defoamer function by a high viscosity, generation of bubbles, craters or pits, and a lowering of strength.

It is acceptable to add suitable polymers to the SL composition as long as they do not adversely affect the physical properties of the composition. Suitable polymers are synthetic polymers such as polyvinyl alcohol, polyethylene oxide, polyethylene glycol, and polyacrylamide, and naturally occurring polymers such as pectin, gelatin, casein, wellan gum, gellan gum, locust bean gum and guar gum.

Water is preferably added in an amount of 15 to 50 parts, more preferably 20 to 45 parts, and even more preferably 22 to 40 parts by weight per 100 parts by weight of the base compound. If the amount of water added exceeds 50 parts by weight, material separation may occur and setting be noticeably retarded. If the amount of water added is less than 15 parts by weight, the desired SL ability may not be obtained even on use of a water reducing agent or the like.

In addition to the foregoing components, the composition may contain cement, an aggregate, a water reducing agent, defoamer, polymer emulsion, set retarder, set accelerator and the like.

Suitable cements include ordinary Portland cement, early-strength Portland cement, moderate heat Portland cement, blast furnace slag cement, silica cement, fly-ash cement, alumina cement, and ultrahigh early-strength Portland cement. A portion of the cement may be replaced by gypsum such as anhydrous gypsum or gypsum hemihydrate. In some cases, gypsum dihydrate is acceptable. Such gypsum can be included as part of generic "cement" referred to herein, as is known.

When a cement-based SL composition is formulated using a cement having set accelerating action such as alumina cement, early-strength Portland cement or ultrahigh early-strength Portland cement, it is recommended to use ordinary Portland cement in combination. Preferably, early-strength Portland cement and ordinary Portland cement are combined in a weight ratio from 100:0 to 1:99; and the other cement having set accelerating action and ordinary Portland cement are combined in a weight ratio from 70:30 to 1:99.

Preferably cement is added in an amount of 15 to 85%, more preferably 20 to 80%, and even more preferably 25 to 75% by weight of the base compound. With less than 15% by weight of cement, the composition may set quite slowly or may not set at all. If the amount of cement added exceeds 85% by weight, drying shrinkage or self-shrinkage may occur, leading to drawbacks like surface crazing after setting.

Suitable aggregates include river sand, mountain sand, sea sand, land sand and silica sand, which are commonly used in ready mixed concretes and as fine aggregates. Preferably the aggregates have a particle size of up to 5 mm, more preferably up to 2 mm, and even more preferably up to 1 mm. The lower limit of particle size is preferably at least 0.0001 mm, more preferably at least 0.001 mm. Too large a particle size may lead to a loss of fluidity whereas aggregate with too small a particle size may require a more amount of water. As used herein, the "particle size" may be measured by the sieving-analysis test using standard sieves.

Preferably the aggregate is added in an amount of 15 to 85%, more preferably 20 to 80%, and even more preferably 25 to 75% by weight of the base compound. If the amount of aggregate added exceeds 85% by weight, which indicates shortage of hydraulic substance, the composition may set quite slowly or may not set. With less than 15% by weight of aggregate, which indicates too much of hydraulic substance, drying shrinkage may occur, leading to cracking.

In the practice of the invention, a water-reducing agent is used, if necessary, for gaining a high fluidity with a smaller amount of water. The water-reducing agents used herein include polycarboxylic acid, melamine and lignin derivatives. Exemplary of the polycarboxylic acid are composites of polycarboxylic acid ethers, composites of polycarboxylic acid ethers with crosslinked polymers, composites of polycarboxylic acid ethers with oriented polymers, composites of polycarboxylic acid ethers with highly modified polymers, polyether carboxylic acid polymers, maleic acid copolymers, maleate copolymers, maleic acid derivative copolymers, carboxyl-containing polyethers, sulfone-terminated polycarboxylate-containing multiple polymers, polycarboxylic acid-based graft copolymers, polycarboxylic acid-based compounds, and polycarboxylic acid ether-based polymers. Exemplary of the melamine are melamine-sulfonic acid-formaldehyde condensates, melamine-sulfonic acid salt condensates, and melamine-sulfonic acid salt-polyol condensates. Exemplary of the lignin are lignin sulfonic acid salt and derivatives thereof.

Inter alia, polycarboxylic acid-based water-reducing agents are preferred from the standpoints of flow and flow retention.

The water-reducing agent is preferably added in an amount of 0.01 to 5 parts by weight per 100 parts by weight of the base compound although an optimum amount depends on the type and grade of the agent. While the water-reducing agent is used to meet the necessity of gaining a high fluidity with a minimal amount of water, too low an amount of the water-reducing agent may fail to achieve the desired effect. Excessive amounts of the water-reducing agent may cause bleeding and material separation, specifically aggregate settle-down, leading to a strength drop and efflorescence.

In the practice of the invention, a defoamer may be used, if necessary, for the purpose of preventing pores or craters from forming on the surface of a coating from air bubbles entrained during the milling step.

The defoamers which can be used herein include oxyalkylene, silicone, alcohol, mineral oil, fatty acid, and fatty acid ester based agents. Suitable oxyalkylene-based defoamers include polyoxylalkylenes such as (poly)oxyethylene-(poly)oxypropylene adducts; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, oxyethylene oxypropylene adducts to higher alcohols of at least 8 carbon atoms or secondary alcohols of 12 to 14 carbon atoms; (poly)oxyalkylene (alkyl) aryl ethers such as polyoxypropylene phenyl ether and polyoxyethylene nonyl phenyl ether; acetylene ethers resulting from addition polymerization of alkylene oxides to acetylene alcohol such as 2,4,7,9-tetramethyl-5-decyne-4,7-diol, 2,5-dimethyl-3-hexyne-2,5-diol, 3-methyl-1-butyn-3-ol; (poly)oxyalkylene fatty acid esters such as diethylene glycol oleic acid ester, diethylene glycol lauric acid ester, and ethylene glycol distearic acid ester; (poly)oxyalkylene sorbitan fatty acid esters such as polyoxyethylene sorbitan monolauric acid ester and polyoxyethylene sorbitan trioleic acid ester; (poly)oxyalkylene alkyl (aryl) ether sulfuric acid ester salts such as polyoxypropylene methyl ether sodium sulfate and polyoxyethylene dodecyl phenol ether sodium sulfate; (poly)oxylalkylene alkyl phosphoric acid esters such as (poly)oxyethylene stearyl phosphate; (poly)oxyalkylene alkyl amines such as polyoxyethylene lauryl amine; and polyoxyalkylene amides. Suitable silicone based defoamers include dimethylsilicone oil, silicone paste, silicone emulsions, organic modified polysiloxanes (typically polyorganosiloxanes such as dimethylpolysiloxane), and fluorosilicone oil. Suitable alcohol based defoamers include octyl alcohol, 2-ethylhexyl alcohol, hexadecyl alcohol, acetylene alcohol, and glycols. Suitable mineral oil based defoamers include kerosene and liquid paraffin. Suitable fatty acid based defoamers include oleic acid, stearic acid, and alkylene oxide adducts thereof. Suitable fatty acid ester based defoamers include glycerol monoliconolate, alkenyl succinic acid derivatives, sorbitol monolaurate, sorbitol trioleate, and natural wax. Inter alia, oxyalkylene based defoamers are preferred for their defoaming performance.

The defoamer is preferably added in an amount of 0.1 to 5 parts, more preferably 0.2 to 4 parts by weight per 100 parts by weight of the base compound. If the amount of the defoamer is less than 0.1 part, air bubbles entrained may not be released, adversely affecting surface quality and even causing a strength drop. If the amount exceeds 5 parts, a further improvement in defoaming effect might not be achieved.

In the practice of the invention, a polymer emulsion may be used, if necessary, for improving the adhesion to the underlay of set mortar. The polymer emulsion may take the form of liquid or re-emulsifiable powder although a liquid polymer emulsion is generally used where SL compositions are prepared in plants. Most emulsions that are commercially available as the premix for on-site mixing are polymer emulsions of the powder (re-emulsifiable) type. Exemplary polymer emulsions include copolymers such as vinyl acetate-vinyl versatate, vinyl acetate-acrylic acid, vinyl acetate-vinyl versatate-acrylate, and styrene-butadiene copolymers; and homopolymers such as vinyl acetate resins, vinyl versatate resins, and acrylic resins. They are added for improving durability or the like and for enhancing surface hardness or the like.

The amount of polymer emulsion added is preferably in a range of 0.5 to 15 parts and more preferably 0.5 to 10 parts by weight, calculated as solids, per 100 parts by weight of the base compound. If the amount of polymer emulsion added is less than the range, it may fail to achieve the desired durability and bonding force. If the amount of polymer emulsion added is more than the range, there may be a likelihood of air entrainment, resulting in drawbacks such as damaged surface appearance and a strength drop. Inter alia, copolymer emulsions are preferred for adhesion and fluidity.

In the practice of the invention, a set retarder may be added, if necessary, to restrain hydration of cement or to retard quick hydration of gypsum. Examples of the set retarder include hydroxycarboxylic acids such as gluconic acid, citric acid, and glucoheptonic acid, inorganic salts thereof with sodium, potassium, calcium, magnesium and ammonium, saccharides such as glucose, fructose, galactose, saccharose, xylose, arabinose, ribose, oligosaccharide and dextran, and boric acid.

The amount of set retarder added is preferably in a range of 0.005 to 50 parts by weight per 100 parts by weight of the base compound. Amounts of less than 0.005 part may fail to provide the desired working life when gypsum or the like is used as the hydraulic substance. If the amount of set retarder exceeds 50 parts, the incipient setting time may be substantially prolonged.

In the practice of the invention, a set accelerator may be added, if necessary, for accelerating the setting time. Set accelerators are generally classified into inorganic compounds and organic compounds. Suitable inorganic compounds include chlorides such as calcium chloride and potassium chloride; nitrites such as sodium nitrite and calcium nitrite; nitrates such as sodium nitrate and calcium nitrate; sulfates such as calcium sulfate, sodium sulfate and alum; thiocyanates such as sodium thiocyanate; hydroxides such as sodium hydroxide and potassium hydroxide; carbonates such as calcium carbonate, sodium carbonate and lithium carbonate; and alumina analogs such as water glass, aluminum hydroxide and aluminum oxide. Suitable organic compounds include amines such as diethanolamine and triethanolamine; calcium salts of organic acids such as calcium formate and calcium acetate; and maleic anhydride.

The set accelerator may be added in amounts of 0.005 to 30 parts by weight per 100 parts by weight of the base compound. Less than 0.005 part of the set accelerator may fail to hasten the setting time whereas more than 30 parts may allow for a substantial change of fluidity and fail to provide a desired working life.

The composition may comprise or consist of the above-defined components. It is useful as a self-leveling composition, and may be used as a floor surface finish or applied to the top of continuous house foundations. The SL composition of the invention may be applied by casting under gravity or by pumping.

### EXAMPLE

Examples of the invention are given below by way of illustration. The term "pbw" is parts by weight.

### Components used

| | |
|---|---|
| (1) Cement: | ordinary Portland cement (Taiheiyo Material Corp.) |
| (2) Aggregate: | Silica sand (0.07-0.6 mm) |
| | Silica sand (0.05-0.1 mm) |
| (3) Water-soluble hydroxyalkyl alkyl cellulose: | Table 1 |
| (4) Water | |
| (5) Water-reducing agent: | powder high-performance water-reducing agent of polycarboxylic acid (Taiheiyo Material Corp.) |
| (6) Defoamer: | oxyalkylene based defoamer (Adeka Corp.) |
| (7) Polymer emulsion: | vinyl acetate-vinyl versatate-acrylate polymer emulsion (re-emulsifiable powdered resin, Nichigo-Mowinyl Co., Ltd.) |

**Table 1**

| Hydroxyalkyl alkyl cellulose | | | | | | | |
|---|---|---|---|---|---|---|---|
| Sample No. | Type | DS | MS | DS+MS | Non-substituted glucose (mol%) | 150-µm oversize fraction (wt%) | Viscosity of 2 wt% aqueous solution (mPa·s) |
| 1 | HPMC | 1.7 | 0.25 | 1.95 | 3.9 | 3.2 | 29,500 |
| 2 | HPMC | 1.4 | 0.46 | 1.86 | 4.5 | 1.8 | 29,300 |
| 3 | HPMC | 1.2 | 0.30 | 1.50 | 9.8 | 4.7 | 30,400 |
| 4 | HEMC | 1.3 | 0.35 | 1.65 | 9.4 | 3.8 | 29,000 |
| 5 | HEMC | 1.5 | 0.28 | 1.78 | 8.5 | 1.2 | 30,800 |
| 6 | HPMC | 1.5 | 0.18 | 1.68 | 13.4 | 1.5 | 29,800 |
| 7 | HPMC | 1.9 | 0.25 | 2.15 | 3.0 | 2.5 | 29,100 |

| | | | | | | | |
|---|---|---|---|---|---|---|---|
| HPMC: hydroxypropyl methyl cellulose HEMC: hydroxyethyl methyl cellulose | | | | | | | |

### Preparation

A 5-liter mortar mixer was filled with a predetermined volume of water. With stirring, a predetermined amount of a pre-blend of the above-specified components (powder) excluding water was admitted. Mixing was continued for 3 minutes, yielding SL compositions. In the mixer, the puddle was operated at a revolution of 285 rpm and a planetary motion of 125 rpm. These compositions were tested by the following methods, with the results shown in Tables 2 and 3.

### 1. SL composition temperature

The temperatures of respective components were adjusted so that the SL composition as mixed was at a temperature of 20±3°C.

### 2. Flow test (according to JASS 15M 103)

A cylinder (flow vessel) having an inner diameter of 50 mm and a height of 51 mm standing on a glass plate was filled with an SL composition and then lifted off, whereupon the SL composition spread on the glass plate. The diameter of the spreading SL composition was measured and reported as "flow value."

### 3. Change with time of fluidity

According to JASS 15M 103, a cylinder having an inner diameter of 50 mm and a height of 51 mm was filled with a SL composition, which was held stationary for a certain time before a flow value was measured. The lapse of time was 60 minutes. A flow ratio is the flow value after 60 minutes of holding divided by the flow value immediately after filling (0 minute). A flow ratio closer to 1.0 suggests an SL composition experiencing a less change with time of fluidity. Those compositions having a flow ratio of 0.75 or higher are judged satisfactory. The SL composition was kept at 20+3°C when it was held stationary.

### 4. Incipient setting time (according to JIS A-6204, Annex 1)

A cylindrical or box metal vessel having an inner diameter or short side of at least 150 mm and an inner height of at least 150 mm was filled with an SL composition and held in a chamber at a temperature of 20+3°C and a humidity of at least 80%. Using an indentation resistance tester having a hydraulic or spring means for applying a drive force to a needle, an indentation resistance value was measured. The incipient setting time is the time passed until the indentation resistance value reached 3.5 N/mm².

**Table 2**

| Component (pbw) | Example | | | | | |
|---|---|---|---|---|---|---|
| | 1 | 2 | 3 | 4 | 5 | 6 |
| Cement | 45 | 45 | 45 | 45 | 45 | 45 |
| Silica sand (0.07-0.6 mm) | 25 | 25 | 25 | 25 | 25 | 25 |
| Silica sand (0.05-0.1 mm) | 30 | 30 | 30 | 30 | 30 | 30 |
| Water-soluble hydroxyalkyl alkyl cellulose | 0.1 | 0.1 | 0.1 | 0.1 | 0.1 | 0.1 |
| | No.1 | No.2 | No.3 | No.4 | No.5 | No.1 |
| Water | 28 | 28 | 28 | 28 | 28 | 25 |
| Water-reducing agent | 0.5 | 0.5 | 0.5 | 0.5 | 0.5 | 0.5 |
| Defoamer | 0.15 | 0.15 | 0.15 | 0.15 | 0.15 | 0.15 |
| Polymer emulsion | 1.5 | 1.5 | 1.5 | 1.5 | 1.5 | - |

| Results | | | | | | |
|---|---|---|---|---|---|---|
| Temperature (°C) | 20.5 | 20.1 | 21.2 | 20.3 | 21.5 | 20.8 |
| Flow value (mm) | 208 | 211 | 207 | 201 | 213 | 203 |
| Flow ratio | 0.88 | 0.85 | 0.78 | 0.80 | 0.82 | 0.85 |
| Incipient setting time (min) | 351 | 358 | 378 | 398 | 391 | 365 |

As seen from Table 2, when water-soluble hydroxyalkyl alkyl celluloses of specific chemical structure are used as the admixture, SL compositions show a minimal change with time of fluidity and a short incipient setting time.

**Table 3**

| Component (pbw) | Comparative Example | | |
|---|---|---|---|
| | 1 | 2 | 3 |
| Cement | 45 | 45 | 45 |
| Silica sand (0.07-0.6 mm) | 25 | 25 | 25 |
| Silica sand (0.05-0.1 mm) | 30 | 30 | 30 |
| Water-soluble hydroxyalkyl alkyl cellulose | 0.1 | 0.1 | 0.1 |
| | No.6 | No.7 | No.6 |
| Water | 28 | 28 | 25 |
| Water-reducing agent | 0.5 | 0.5 | 0.5 |
| Defoamer | 0.15 | 0.15 | 0.15 |
| Polymer emulsion | 1.5 | 1.5 | - |

| Results | | | |
|---|---|---|---|
| Temperature (°C) | 22.1 | 20.1 | 19.9 |
| Flow value (mm) | 211 | 206 | 215 |
| Flow ratio | 0.63 | 0.74 | 0.57 |
| Incipient setting time (min) | 448 | 358 | 466 |

As seen from Table 3, the compositions of Comparative Examples 1 and 3 show a low flow ratio (a substantial change of fluidity with time) and a long incipient setting time because the water-soluble hydroxyalkyl alkyl celluloses used have a proportion of non-substituted glucose outside the specific range. The composition of Comparative Example 2 shows a low flow ratio because the water-soluble hydroxyalkyl alkyl cellulose used has a DS and DS+MS outside the specific ranges identified by the inventors.

For the avoidance of doubt it is confirmed that in the general description above, in the usual way the proposal of general preferences and options in respect of different features of the composition and its use constitutes the proposal of general combinations of those general preferences and options for the different features, insofar as they are combinable and compatible and are put forward in the same context.

In respect of numerical ranges disclosed in the present description it will of course be understood that in the normal way the technical criterion for the upper limit is different from the technical criterion for the lower limit, i.e. the upper and lower limits are intrinsically distinct proposals.

## Claims

1. A self-leveling composition comprising water-soluble hydroxyalkyl alkyl cellulose, cement, aggregate and water, wherein
said water-soluble hydroxyalkyl alkyl cellulose has a degree of alkyl substitution of 1.2 to 1.7, the sum of the degree of alkyl substitution and a molar substitution of hydroxyalkyl being 1.5 to 2.0, and the proportion of glucose rings not substituted with alkyl and hydroxyalkyl being not more than 10 mol% based on glucose ring units.

2. A self-leveling composition of claim 1, further comprising a water-reducing agent.

3. A self-leveling composition of claim 1 or 2 further comprising a defoamer.

4. A self-leveling composition of claim 1, 2 or 3 wherein said water-soluble hydroxyalkyl alkyl cellulose is hydroxypropyl methyl cellulose or hydroxyethyl methyl cellulose.

5. A self-leveling composition of any one of the preceding claims in which, in said cellulose, said proportion of glucose rings not substituted with alkyl and hydroxyalkyl is not more than 9 mol% based on glucose ring units.

6. A self-leveling composition of any one of the preceding claims wherein said water-soluble hydroxyalkyl alkyl cellulose is contained at from 0.03 to 0.45 parts by weight per 100 parts by weight of the base compound, base compound being the combination of cement, any gypsum and the aggregate.

7. A self-leveling composition of any one of the preceding claims wherein said water-soluble hydroxyalkyl alkyl cellulose is such that the oversize fraction on No. 100 sieve with an opening of 150 µm described in the Japanese Pharmacopoeia, 16th Edition is up to 5.0% by weight.

8. A self-leveling composition of any one of the preceding claims wherein the aggregate particle size is not more than 5 mm.

9. A self-leveling composition of any one of the preceding claims wherein the aggregate constitutes from 20 to 80% by weight of the base compound, base compound being the combination of cement, any gypsum and the aggregate.

10. Use of a composition of any one of claims 1 to 9 as a self-leveling composition, as a floor surface finish or as a foundation top leveler.
